Europäisches Patentamt

European Patent Office

Office européen des brevets

(11) Veröffentlichungsnummer: **0 144 941**
**B1**

(12) **EUROPÄISCHE PATENTSCHRIFT**

(45) Veröffentlichungstag der Patentschrift:
27.09.89

(21) Anmeldenummer: 84114601.2

(22) Anmeldetag: 01.12.84

(51) Int. Cl.⁴: **B 29 C 47/68**

(54) Siebwechselvorrichtung zur Reinigung von Kunststoffschmelzen.

(30) Priorität: 06.12.83 DE 3344002

(43) Veröffentlichungstag der Anmeldung:
19.06.85 Patentblatt 85/25

(45) Bekanntmachung des Hinweises auf die Patenterteilung:
27.09.89 Patentblatt 89/39

(84) Benannte Vertragsstaaten:
AT GB IT

(56) Entgegenhaltungen:
DE-B- 2 153 962
US-A- 3 983 038
US-A- 4 025 434

(73) Patentinhaber: Gneuss, Detlef, Am hohen Ufer 2a,
D-4970 Bad Oeynhausen (DE)

(72) Erfinder: Gneuss, Detlef, Am Hohen Ufer 2a, D-4970 Bad
Oeynhausen (DE)
Erfinder: Patrovsky, Hubert, Kopernikusstrasse 12,
D-4972 Löhne 3 (DE)
Erfinder: Zibell, Bodo, Barkser Strasse 88, D-4952 Porta
Westfalica (DE)

(74) Vertreter: Stracke, Alexander, Dipl.-Ing. et al,
Patentanwälte Dipl.-Ing. Loesenbeck Dipl.-Ing. Stracke
Jöllenbecker Strasse 164 Postfach 5605,
D-4800 Bielefeld 1 (DE)

## Beschreibung

Die Erfindung betrifft eine Siebvorrichtung gemäß Oberbegriff des Patentanspruches 1.

Bei Siebvorrichtungen der gattungsgemäßen Art werden bestimmungsgemäß die Durchbrüche der innerhalb des Gehäuses verschiebbaren oder drehbaren Platten oder Scheiben wechselweise in den einen Teil des Fließkanales der Hochdruckpresse bildenden Durchbruch des Gehäuses eingebracht. Derartige Siebvorrichtungen sind beispielsweise aus der US-A-4 025 434 bekannt. Immer wenn ein neuer Durchbruch in den Bereich der Durchflußbohrung eintritt, ändern sich die Druckverhältnisse der Kunststoffschmelze, da die in dem neu in die Durchflußbohrung eintretenden Durchbruch vorhandene Luft von der Kunststoffschmelze verdrängt werden muß. Dies führt unter ungünstigen Umständen auch zu einer Blasenbildung in der Kunststoffschmelze, da die in dem betroffenen Durchbruch befindliche Luft teilweise von der Kunststoffschmelze umschlossen wird.

Nun ist gemäß der Konstruktion nach der US-A-4 025 434 vorgesehen, dem jeweils als nächsten in die Durchflußbohrung einbringbaren Durchbruch eine Luftabführung zuzuordnen.

Dies dient dem Zweck, eine Entlüftung dieses Durchbruches durch Einfließen von Schmelze in diesen Durchbruch zu ermöglichen.

Die dieser Art angestrebte Entlüftung wird allerdings in der Praxis nur äußerst unvollkommen durchführbar sein, insbesondere wenn man berücksichtigt, daß bei Hochdruckpressen in Druckbereichen von etwa 100 bis 400 bar gearbeitet wird. Dies bedeutet, daß bei einem Entlüftungssystem analog der US-A-4 025 434 die Kunststoffschmelze mit enorm hohem Druck und demzufolge auch enorm hoher Geschwindigkeit in den zu entlüftenden Bereich eingespritzt wird. Daraus folgt, daß Lufteinschlüsse im eigentlich vollständig zu entlüftenden Raum nicht zu vermeiden sind. Ebenso unvermeidbar ist es, daß Kunststoffschmelze aus der Luftabführung austreten muß.

Doch selbst wenn einmal hypothetisch unterstellt würde, daß es mit erheblichem Aufwand hinsichtlich der Gestaltung der Durchbrüche gelingen würde, die einfließende Schmelze strömungstechnisch so zu führen, daß eine praktisch vollständige Entlüftung der Durchbrüche durchführbar wäre, bleibt bei diesem Stand der Technik ein wesentlicher und entscheidender Nachteil bestehen, der darin zu sehen ist, daß die in den zu entlüftenden Durchbruch einfließende Schmelze mit dem Sauerstoff der auszutreibenden Luft in Berührung kommt. Dies ist bei vielen Schmelzen äußerst unerwünscht, da die Sauerstoffzufuhr die Schmelzeeigenschaften beeinträchtigen kann.

Der vorliegenden Erfindung liegt die Aufgabe zugrunde, eine Siebvorrichtung der gattungsgemäßen Art dahingehend zu verbessern, daß die Kontinuität der Kunststoffschmelze beim Eintritt eines Durchbruches in den Fließkanal weitestgehend erhalten bleibt.

Die erfindungsgemäße Lösung ergibt sich aus dem kennzeichnenden Teil des Patentanspruches 1 in Verbindung mit dessen Oberbegriff.

Durch die Evakuierung des als nächsten in die Durchflußbohrung einzubringenden Durchbruches erfolgt der Eintritt des Durchbruches in den Bereich der einen Teil des Fließkanales bildenden Durchflußbohrung praktisch störungsfrei, da die Kunststoffschmelze drucktechnisch nicht mehr beeinträchtigt wird und auch keine Lufteinschlüsse mehr in die Kunststoffschmelze gelangen können.

Durch die Evakuierung des betreffenden Durchbruches ergibt sich eine sehr sichere und lufteinschlußfreie Ausfüllung des Durchbruches, da zusätzlich zu dem Druck, mit dem die Kunststoffschmelze in diesen Durchbruch eingebracht wird, noch der Saugeffekt des evakuierten Durchbruches hinzukommt.

Eine Beeinträchtigung der Schmelzeeigenschaften durch Sauerstoff ist weitestgehend vermieden, da durch die Evakuierung eine beträchtliche Verringerung des Sauerstoffanteiles in dem durch die Kunststoffschmelze auszufüllenden Durchbruch erreicht wird.

Durch geschickte Anordnung der strömungstechnisch leitenden Verbindung zu dem über die Absaugbohrung unmittelbar evakuierbaren Durchbruch kann erreicht werden, daß auch noch allerletzte Luftanteile sicher entweichen können, wobei dies nicht nur durch die Wirkung der einfließenden Kunststoffschmelze, sondern auch durch die Wirkung der das Vakuum erzeugenden Absaugpumpe erfolgt. Das Austreten von Kunststoffschmelze ist hingegen sicher verhindert, da keine ins Freie führende Luftabführung vorgesehen ist.

Dies ist insofern besonders vorteilhaft, als das Austreten von Kunststoffschmelze ins Freie mit vielerlei Gefahren verbunden ist, einerseits, weil die Kunststoffschmelze sehr heiß ist und somit eine Gefährdung von Bedienungspersonen mitsichbringt und andererseits der Austritt von Kunststoffschmelze mit einer u.U. sogar giftigen Dampf- und Gasbildung verbunden sein kann.

Ein die Erfindung weiterbildendes Merkmal ist Gegenstand eines Unteranspruches.

Ausführungsbeispiele der Erfindung sind in den Zeichnungen dargestellt und werden im folgenden näher beschrieben. Es zeigt:

Fig. 1 eine schematische Darstellung einer Hochdruckpresse mit Siebvorrichtung und nachgeschaltetem Werkzeug

Fig. 2 eine Ansicht der Siebvorrichtung in Richtung des Pfeiles II in Fig. 1

Fig. 3 eine der Fig. 2 entsprechende Ansicht einer Siebvorrichtung nach einem weiteren Ausführungsbeispiel der Erfindung,

Fig. 4 einen Schnitt nach IV–IV in Fig. 3,

Fig. 5 einen Teilschnitt nach der Linie V–V in Fig. 3.

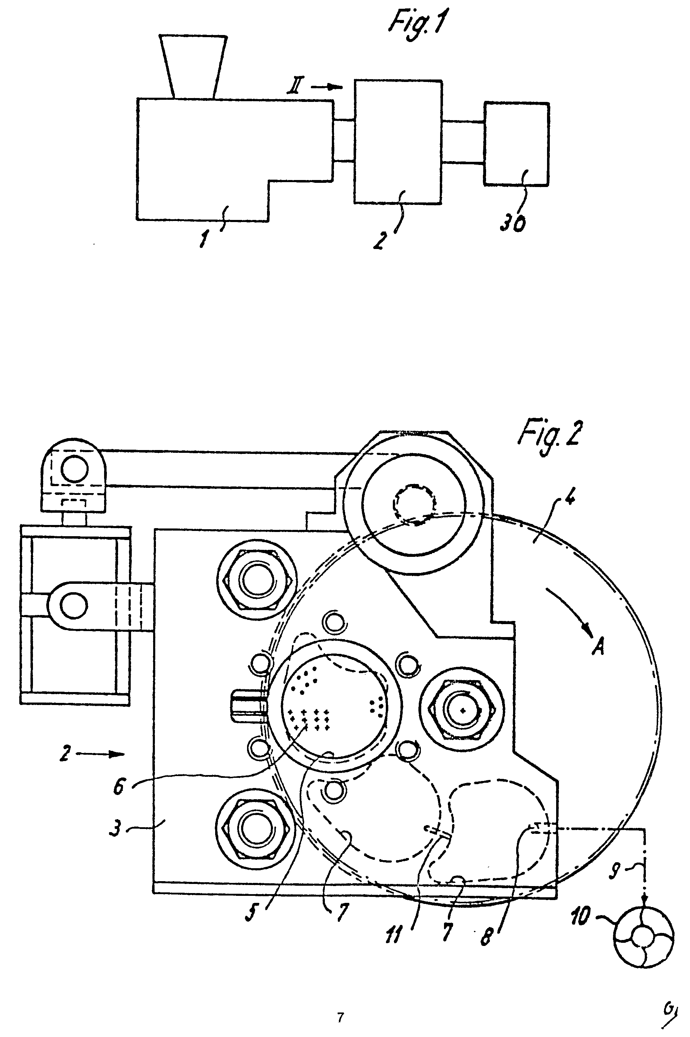

In der in Fig. 1 dargestellten Hochdruckpresse 1 wird Kunststoff in an sich bekannter Weise plastifiziert und anschließend durch eine Siebvorrichtung 2 geführt und dort gereinigt. Von der Siebvorrichtung 2 ausgehend wird die gereinigte Kunststoffschmelze einem Werkzeug 30 zugeführt.

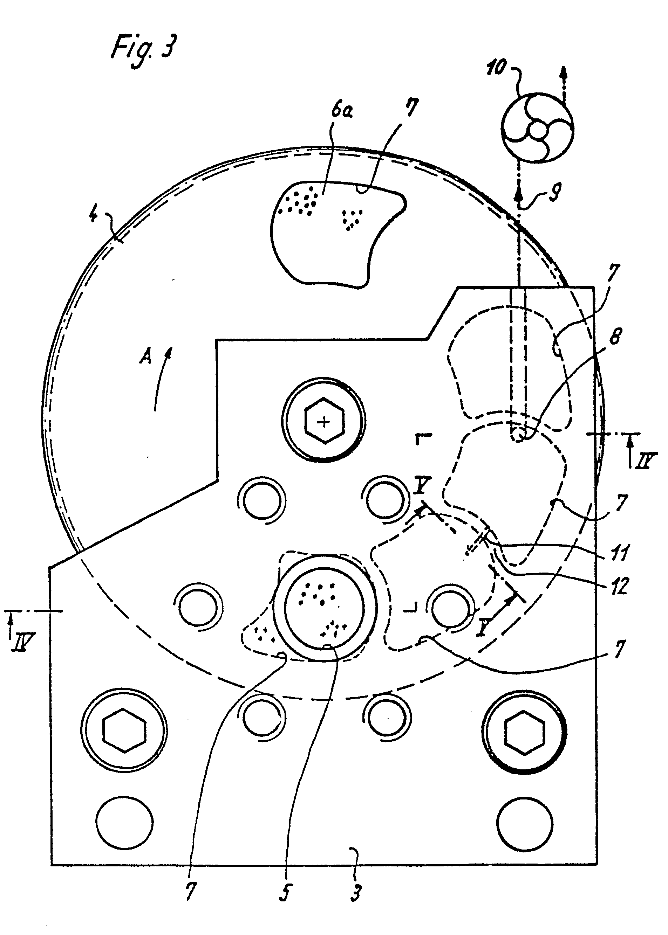

Bei dem in den Figuren 2 und 3 dargestellten Ausführungsbeispiel besteht die Siebvorrichtung im wesentlichen aus einem Gehäuse 3 und einer darin drehbar gelagerten Scheibe 4. Innerhalb des Gehäuses 3 ist eine Durchflußbohrung 5 angeordnet, die einen Teil des Fließkanales der Hochdruckpresse 1 bildet. In dieser Durchflußbohrung 5 ist eine Siebscheibe 6 angeordnet.

Die Scheibe 4 ist mit mehreren Durchbrüchen 7 ausgestattet. Die Scheibe 4 ist an ihrem ganzen Umfang mit den erwähnten Durchbrüchen 7 versehen, so daß sich ein Teil der Durchbrüche immer innerhalb des Gehäuses 3 befindet, während andere Durchbrüche sich außerhalb des Gehäuses befinden. Die Durchbrüche 7 können durch Drehung der Scheibe 4 in stetigem Wechsel in den Bereich der Durchflußbohrung 5 gebracht werden.

Abweichend von dieser Ausgestaltung kann die Siebvorrichtung auch aus einer länglichen, schiebeartigen Platte gebildet sein, die eine entsprechende Anzahl von Durchbrüchen trägt. In diesem Fall werden durch translatorisches Hin- und Herschieben der Platte die Durchbrüche im Wechsel in den Bereich der Durchflußbohrung gebracht.

Bei dem Ausführungsbeispiel nach Fig. 2, bei dem die Siebscheibe 6 innerhalb der Durchflußbohrung 5 angeordnet ist, nehmen die Durchbrüche 7 innerhalb der Scheibe 4 bei ihrem Durchlauf durch das Gehäuse 3 vor der Siebscheibe 6 liegende Verunreinigungen mit und tragen so zu einer Säuberung der Siebscheibe 6 bei.

In Figur 2 ist eine Betriebsphase dargestellt, in der ein Durchbruch 7 im Bereich der Durchflußbohrung 5 liegt. Die Drehrichtung der Scheibe 4 ist durch den Pfeil A gekennzeichnet. Durch Drehung der Scheibe gelangt der an den vorgenannten Durchbruch angrenzende, in Figur 2 noch außerhalb der Durchflußbohrung 5 liegende Durchbruch dann als nächster in die Durchflußbohrung 5. Die Kunststoffschmelze muß nun den Bereich des neu eintretenden Durchbruches 7 ausfüllen. Um dieses zu gewährleisten, ist im dargestellten Ausführungsbeispiel innerhalb des Gehäuses 3 und im Durchlaufbereich der Durchbrüche 7 eine Absaugbohrung 8 angebracht, die über eine Leitung 9 mit einer Absaugbohrung 10 verbunden ist. Über diese Absaugpumpe 10 wird jeder Durchbruch 7, bevor er in die Durchflußbohrung 5 eingebracht wird, evakuiert. Die Anordnung ist nun so getroffen, daß die Absaugbohrung 8 so weit entfernt von der Durchflußbohrung 5 mündet, daß zwischen dem unmittelbar beaufschlagten Durchbruch und der Durchflußbohrung 5 noch ein weiterer Durchbruch 7 liegt, der naturgemäß schon früher unmittelbar evakuiert wurde. Dieser als nächster in die Durchflußbohrung 5 einzubringende Durchbruch 7 bleibt jedoch mit dem unmittelbar beaufschlagten Durchbruch 7 strömungstechnisch leitend verbunden, so daß seine Evakuierung aufrechterhalten bleibt. Hierzu ist innerhalb des Gehäuses 3 ein Überströmkanal 11 vorgesehen, der die beiden genannten Durchbrüche 7 miteinander verbindet. Die Evakuierung erfolgt somit in jedem Fall auch dann noch, wenn der betreffende Durchbruch 7 als nächster in die Durchflußbohrung 5 eintritt, so daß die dann in ihn einströmende Kunststoffschmelze schnell und problemlos die Ausfüllung des Durchbruches erzielen kann, während andererseits ein unbeabsichtigtes Ansaugen von Kunststoffschmelze mittels der Absaugpumpe 10 vermieden ist.

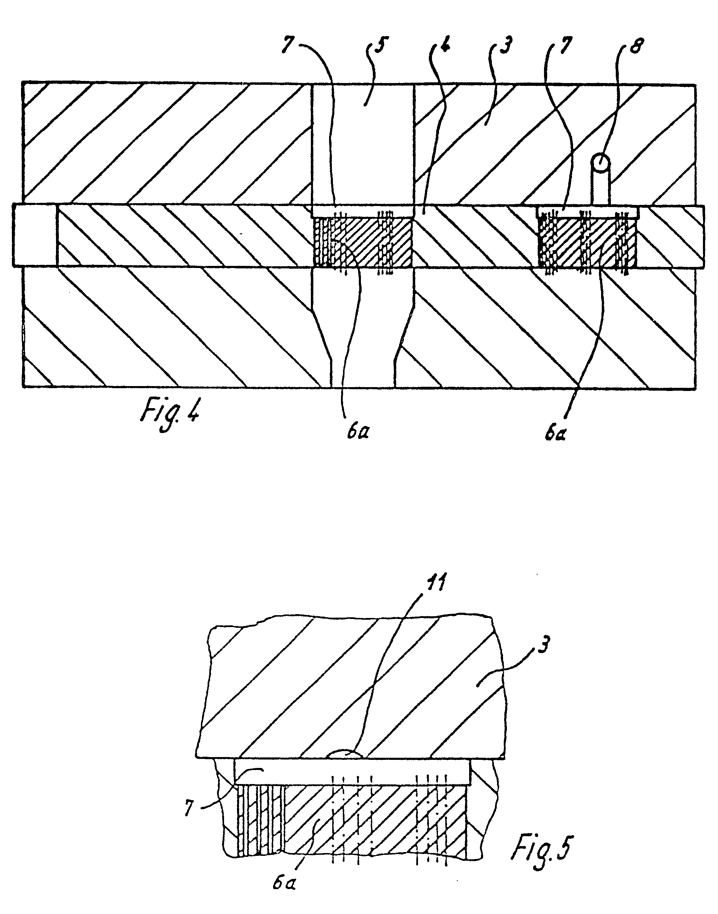

Bei dem in den Figuren 3–5 dargestellten Ausführungsbeispiel ist grundsätzlich die gleiche Konstruktion vorgesehen. Es dreht eine Scheibe 4 gemäß Pfeil A innerhalb des Gehäuses 3. Bei dieser Ausführungsform sind jedoch die Durchbrüche 7 selbst mit Siebscheiben 6a versehen, wie in Figur 3 illustriert. Die Durchflußbohrung 5 ist dagegen hier ohne Siebscheibe belassen. Die einzelnen in den Durchbrüchen 7 liegenden Siebscheiben 6a werden durch die Drehung der Scheibe 4 wechselweise in die Durchflußbohrung 5 gebracht. Auch bei dieser Ausführungsform ist in der gleichen Weise wie beim Ausführungsbeispiel nach Figur 2 im Gehäuse 3 eine Absaugbohrung 8 vorgesehen, die über eine Leitung 9 mit einer Absaugpumpe 10 verbunden ist. Auch hier wird der als nächster in die Durchflußbohrung 5 einzubringende Durchbruch 7 über den Überströmkanal 11 und den angrenzenden Durchbruch 7, der seinerseits unmittelbar von der Absaugbohrung 8 beaufschlagt wird, evakuiert.

Die Länge des Überströmkanales 11 entspricht mindestens der Breite eines Steges 12, der zwei hintereinanderliegende Durchbrüche 7 voneinander trennt.

Es gibt Kunststoffschmelzen, deren Verhalten gegenüber der Luft im Durchbruch es ermöglichen, auf eine Evakuierung zu verzichten. In so einem Fall kommt man ohne die Absaugpumpe aus. Es genügt, wenn die Luft z.B. über das oben geschilderte Kanalsystem nach außen entweichen kann.

Bezugszeichenliste

1 Hochdruckpresse
2 Siebvorrichtung
3 Gehäuse
4 Scheibe
5 Durchflußbohrung
6 Siebscheibe
6a Siebscheibe
7 Durchbruch
8 Absaugbohrung
9 Leitung
10 Absaugpumpe
11 Überströmkanal
12 Steg
30 Werkzeug

**Patentansprüche**

1. Siebvorrichtung zur Reinigung von Kunststoffschmelzen bei einer Hochdruckpresse, bestehend aus einem Gehäuse (3) mit einer einen Teil des Fließkanales der Hochdruckpresse bildenden Durchflußbohrung (5) und einer im Gehäuse verschiebbaren oder drehbaren Platte oder Scheibe (4) mit mehreren Durchbrüchen (7), von denen mindestens einer ständig im Bereich der Durchflußbohrung und mindestens einer ständig außerhalb des Gehäuses liegt und mindestens dem als nächsten in die Durchflußbohrung einbringbaren Durchbruch eine Luftabführung zugeordnet ist, wobei entweder innerhalb der Durchflußbohrung eine Siebscheibe (6, 6a) oder innerhalb der Durchbrüche Siebscheiben angeordnet sind, gekennzeichnet durch folgende Merkmale:

a) Es liegen mindestens zwei Durchbrüche (7) ständig innerhalb des Gehäuses (3), aber außerhalb der Durchflußbohrung (5),

b) der jeweils nach nächster in die Durchflußbohrung (5) einbringbare Durchbruch (7) ist vor seinem Eintritt in die Durchflußbohrung (5) evakuierbar,

c) im Gehäuse (3) ist eine Absaugbohrung (8) vorgesehen, an welche eine Leitung (9) einer Absaugpumpe (10) angeschlossen ist,

d) die Mündung der Absaugbohrung (8) ist von der Durchflußbohrung (5) derart weit entfernt angeordnet, daß zwischen dem Durchbruch (7), der über die Absaugbohrung (8) unmittelbar evakuierbar ist, und demjenigen Durchbruch (7), der jeweils innerhalb der Durchflußbohrung (5) des Gehäuses (3) liegt, der jeweils als nächster in die Durchflußbohrung (5) einbringbare Durchbruch (7) liegt,

e) der über die Absaugbohrung (8) unmittelbar evakuierbare Durchbruch (7) steht mit dem jeweils als nächsten in die Durchflußbohrung (5) einbringbaren Durchbruch (7) strömungstechnisch in leitender Verbindung.

2. Siebvorrichtung nach Anspruch 1, dadurch gekennzeichnet, daß die strömungstechnische Verbindung durch einen innerhalb des Gehäuses (3) vorgesehenen Überströmkanal (11) gebildet ist.

**Claims**

1. A sieve apparatus for cleaning plastics melts in a high pressure press, comprising a housing (3) having a through-flow bore (5) forming a part of the flow passage of the high pressure press, and a plate or disc (4) which is slidable or rotatable in the housing and which has a plurality of apertures (7) of which at least one is constantly in the region of the through-flow bore and at least one is constantly outside the housing and an air exhaust is associated at least with the aperture which can next be brought into the through-flow bore, wherein either a sieve disc (6, 6a) is arranged within the through-flow bore or sieve discs are arranged within the apertures, characterised by the following features:

a) there are at least two apertures (7) constantly within the housing (3) but outside the through-flow bore (5),

b) the respective aperture (7) which can next be brought into the through-flow bore (5) can be evacuated before it passes into the through-flow bore (5),

c) provided in the housing (3) is a suction removal bore (8) to which is connected a conduit (9) of a suction removal pump (10),

d) the mouth of the suction removal bore (8) is arranged at a distance from the through-flow bore (5) such that the respective aperture (7) which can next be brought into the through-flow bore (5) is disposed between the aperture (7) which can be evacuated directly by way of the suction removal bore (8) and that aperture (7) which is respectively disposed within the through-flow bore (5) of the housing (3), and

e) the aperture (7) which can be evacuated directly by way of the suction removal bore (8) is in flow-conducting communication with the respective aperture (7) which can next be brought into the through-flow bore (5).

2. A sieve apparatus according to claim 1 characterised in that the flow communication is formed by a flow transfer passage (11) within the housing (3).

**Revendications**

1. Le dispositif de tamisage destiné à la purification de matières plastiques en fusion passant dans une presse à haute pression, composé d'une part, d'un boîtier (3) muni d'une ouverture d'écoulement (5) qui constitue elle-même une partie du canal d'écoulement de la presse à haute pression et d'autre part, d'une plaque / d'un disque mobile ou rotatif (4) muni de plusieurs orifices (7), dont un au moins se trouve constamment dans la zone de l'ouverture d'écoulement et un au moins à l'extérieur du boîtier – le même disque étant équipé d'au moins une évacuation d'air attribuée à l'orifice se présentant directement dans l'ouverture d'écoulement, un ou plusieurs disques de tamisage ayant été disposés soit dans l'ouverture d'écoulement soit dans les orifices. Le dispositif ici décrit se distingue par les caractéristiques suivantes:

a) Il se trouve constamment au moins deux orifices (7) à l'intérieur du boîtier (3), situés en dehors de l'ouverture d'écoulement (5),

b) l'orifice (7) se présentant directement dans l'ouverture (5) peut être évacué avant son entrée dans l'ouverture d'écoulement (5),

c) il est prévu dans le boîtier (3) un percement d'aspiration (8), sur lequel une conduite (9) d'une pompe d'aspiration (10) est raccordée,

d) la bouche du percement d'aspiration (8) est disposée de manière suffisamment éloignée de l'ouverture d'écoulement, afin que l'orifice (7) respectif se présentant directement devant l'ouverture d'écoulement puisse être disposé entre l'orifice (7) qui sera directement évacué par l'intermédiaire du percement d'aspiration (8) et l'orifice (7) situé respectivement à l'intérieur de l'ouverture d'écoulement (5) du boîtier (3),

e) l'orifice (7) pouvant être directement évacué par l'intermédiaire du percement d'aspiration (8) et l'orifice (7) respectif entrant directement dans l'ouverture d'écoulement (5) sont reliés au moyen d'une connexion conductrice de fluides.

2. Le dispositif de tamisage conforme à la première partie de ces revendications, qui se caractérise par le fait, que la connexion conductrice de fluides se compose d'un canal de décharge (11) prévu dans le boîtier (3).

*Fig.1*

*Fig.2*

Fig. 3

Fig. 4

Fig. 5